# EUROPEAN PATENT APPLICATION

(11) **EP 1 450 273 A1**
(43) Date of publication of application: **25.08.2004**
(21) Application number: 04004047.9
(22) Date of filing: 23.02.2004
(51) Int. Cl.: G06F 17/30, H04Q 7/22

(54) **Mobile terminal data memory sharing system and computer program thereof**

(30) Priority: 24.02.2003 JP 2003045795
(71) Applicant: NEC CORPORATION, Tokyo (JP)
(72) Inventor: Fukuzato, Atsushi, Tokyo (JP)
(74) Representative: Betten & Resch

(57) **Abstract**

A client terminal (1), which is specifically a mobile terminal, receives shared data from a server terminal (2) and issues a request for receiving the data. The shared data in the server terminal can be obtained by the client terminal, and the shared data can be regarded as data virtually held in the client terminal. The server terminal releases shared data to the client terminal and functions as hardware of any type (including a mobile terminal) having a radio communication unit. In this way, by sharing data, a mobile terminal data memory sharing system, in which a data area in a mobile terminal can be effectively used, can be obtained.

## Description

### Field of the Invention

The present invention relates to a mobile terminal data memory sharing system for sharing data available on portable terminals and to a program for allowing a server terminal and client terminal(s) to realize a mobile terminal data memory sharing function.

### Description of the Related Art

In a known art, a shared-information management system is disclosed (for example, Japanese Unexamined Patent Application Publication No. 2002-116966). In this system, shared information used in a plurality of terminals by a user is transferred between terminals, or shared information in a terminal used by a plurality of users is transferred to a terminal at time intervals, through a mobile phone.

In this known art, however, a storage area such as an address book and a Java application is limited in a mobile terminal, and thus the user can hold only a limited amount of data. Also, the user may have a plurality of mobile terminals and data may be shared among the mobile terminals.

It is an object of the present invention to provide a mobile terminal data memory sharing system for effectively using a data area in a mobile terminal by sharing data and a program for realizing a mobile terminal data memory sharing function.

A mobile terminal data memory sharing system of the present invention includes a server terminal and a client terminal. The server terminal includes a unit which obtains shared data from the client terminal, regards the shared data as data virtually held by the client terminal, and releases the shared data to the client terminal by radio communication. The client terminal includes a unit which transmits a request for receiving the shared data to the server terminal and a unit which receives the shared data from the server terminal.

The client terminal may include a unit which stores connected-party information, which is transmitted by the server terminal and which serves as authentication information used for sharing data, in the client terminal by automatically synchronizing to radio data.

The connected-party information stored in the client terminal may include a plurality of pieces of the connected-party information, among which an optimal piece synchronized to received radio data may be selected.

The server terminal may transmit a requested number of pieces of data by the client terminal.

When the number of pieces of data stored in the server terminal is larger than the number of pieces of data requested by the client terminal, all prior and subsequent pieces of the data can be referred to by a request from the client terminal.

The server terminal can restrict the shared data.

The client terminal can create request data corresponding to an application and the server terminal can transmit only data corresponding to the request data to the client terminal.

The shared data provided by the server terminal is not registered with the client terminal but can be used only virtually, and the shared data can be shared in a limited space and can be distributed as a business advertising element for demonstration.

A program of the present invention for allowing a server terminal and a client terminal to realize a mobile terminal data memory sharing function is incorporated into the above-described mobile terminal data memory sharing system. The mobile terminal data memory sharing function includes an OS function, a communication function, a mobile-terminal function, a shared-data management function, a shared-data connected-party management function, and an application function. The OS function serves as a platform environment in a mobile terminal. The communication function is used for communication between the server terminal and the client terminal performed for obtaining data sharing information. The mobile-terminal function has a software function specialized in a mobile terminal. The shared-data management function requests shared data to the server terminal through the communication function when operating as the client terminal, and transmits the shared data to the client terminal through the communication function when operating as the server terminal. The shared-data connected-party management function holds connected-party information used for connecting the client terminal to the server terminal, the connected-party information including a plurality of pieces, and selects a piece of the information compatible with the server terminal so as to access the shared data. The application function is held in a mobile terminal, requests access to shared data, and obtains shared data specialized in an application in accordance with the request.

The present invention is characterized in a system for sharing data available on mobile terminals. The data capacity which can be used in a mobile terminal is limited by hardware, and thus each mobile terminal has different data capacity. The present invention focuses attention on this point, and provides a system for sharing data stored in another hardware apparatus and a system for sharing data among users.

In the present invention, data of address book stored in a hardware apparatus can be used by a plurality of mobile terminals by using a data sharing system. Further, even if data is frequently updated, data in only the hardware apparatus need be updated and the users of other terminals need not be aware of update. Also, by using the data sharing system in a limited area (for example, company and amusement park), data which is not ordinarily held can be referred to in real time and a business effect can be obtained.

The shared data is not limited to an address book, and by distributing application data such as a Java application under a limited environment, demonstration including an advertising effect can be performed.

In view of advantages of the present invention, by using the address book data sharing system, data stored in a hardware apparatus can be used by a plurality of mobile terminals. Also, even if the data is frequently updated, the data in only the hardware apparatus need be updated and the users of other terminals need not be aware of update. Further, by using the data sharing system in a limited area (for example, company and amusement park), data which is not ordinarily held can be referred to in real time and a business effect can be obtained.

The shared data is not limited to an address book, and by distributing application data such as a Java application under a limited environment, demonstration including an advertising effect can be effectively performed.
Fig. 1 shows an overview of a system of an embodiment of the present invention;
Fig. 2 shows a software structure of the embodiment;
Fig. 3 shows a sequence performed when a server terminal provides shared-data connected-party information, which is required for referring to shared data, to a client terminal; and
Fig. 4 shows a sequence performed when the client terminal accesses shared data in the server terminal.

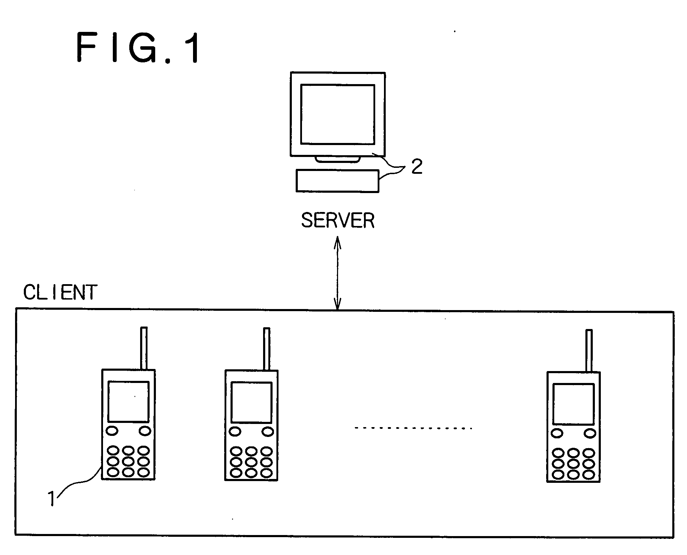

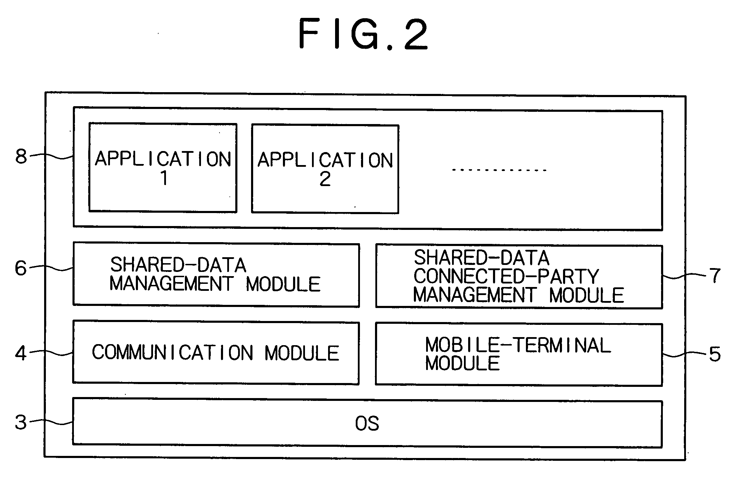

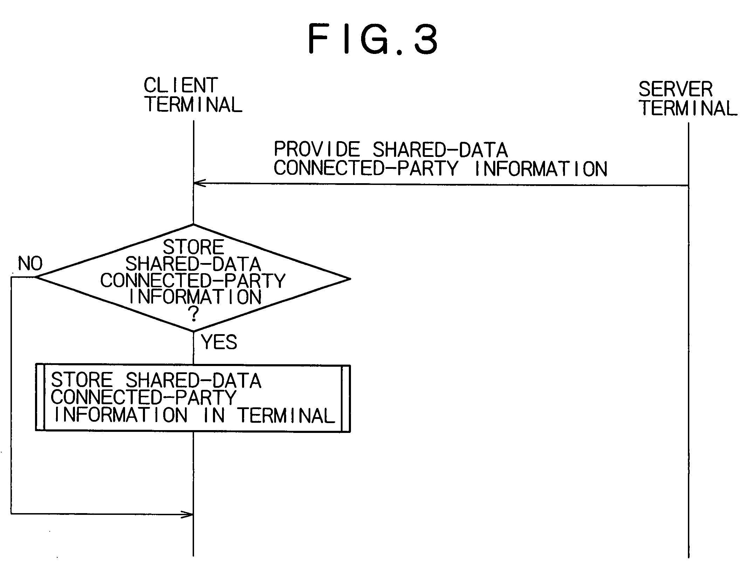

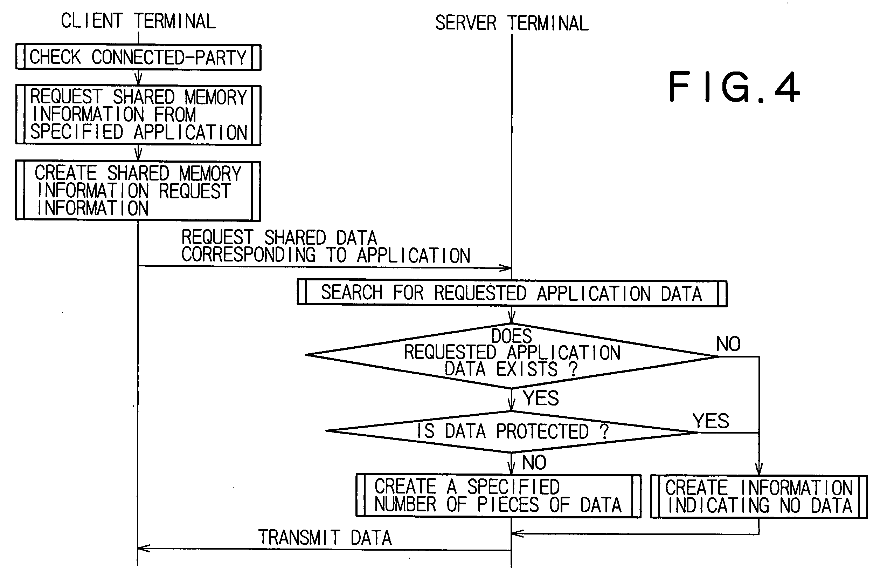

The configuration of an embodiment of the present invention is shown in Figs. 1 and 2, in which Fig. 1 shows an overview of a system and Fig. 2 shows the software structure thereof. Figs. 3 and 4 show sequences for using the system, which will be referred to later for describing the operation of the embodiment.

Fig. 1 shows a server-client relationship, and the system includes client terminals 1 and a server terminal 2. Hereinafter, the role of each terminal will be described.

### (1) Client terminal

Each of the client terminals 1, which is a mobile terminal, receives shared data from the server terminal 2 and issues a request for receiving the data. The shared data in the server terminal 2 can be obtained by the client terminal 1, and the shared data can be regarded as data virtually held by the client terminal 1.

### (2) Server terminal

The server terminal 2 releases shared data to the client terminals 1, and serves as any type of hardware (including a mobile terminal) having a radio communication unit.

Fig. 2 shows the software structure for realizing the system shown in Fig. 1, and the structure mainly includes the following six units.

### (1) OS

An OS 3 is a platform environment in a mobile terminal, the type thereof not being specified.

### (2) Communication module

A communication module 4 is used for communicating with the server terminal in order to obtain data sharing information and has a communicating function, such as HTTP protocol, TCP/IP, Bluetooth, and infrared.

### (3) Mobile-terminal module

A mobile-terminal module 5 is a software module group specialized in a mobile terminal, but is not referred to in the present invention.

### (4) Shared-data management module

When a shared-data management module 6 operates as the client terminal 1, it requests shared data to the server terminal 2 through the communication module 4. When the shared-data management module 6 operates as the server terminal 2, it transmits shared data through the communication module 4.

### (5) Shared-data connected-party management module

A shared-data connected-party management module 7 holds information used for connecting to the server terminal 2. A plurality of pieces of connected-party information may be held in the module 7. Also, the module 7 selects a piece of connected-party information compatible with the server terminal 2, and the compatible piece can be used for accessing shared data.

### (6) Application

An application 8 is an application such as a telephone directory stored in a mobile terminal and Java. The application 8 requests access to shared data so as to obtain shared data specialized in the application.

Next, the operation of the embodiment of the present invention will be described.

Fig. 3 shows a sequence performed when the server terminal 2 provides shared-data connected-party information to the client terminal 1, the information being required for referring to shared data. The shared-data connected-party information is stored and managed by the shared-data connected-party management module 7. The information may be received directly from the server terminal, as shown in Fig. 3. Alternatively, the information may be downloaded from a browser of known art, or may be received from an external device such as an SD card so that the user can store the information.

First, the server terminal 2 transmits connected-party information used for accessing shared data stored in the server terminal 2 by using a wireless method, such as Bluetooth or infrared. At this time, the server terminal 2 can transmit/receive data and radio data. The client terminal 1 automatically synchronizes to the radio data transmitted by the server terminal 2 and stores the shared-data connected-party information used for accessing shared data in the server terminal 2 in the mobile terminal by using the shared-data connected-party management module 7 based on a determination of the user of the client terminal 1. From among pieces of the information stored in the mobile terminal, a piece compatible with the server terminal 2 is selected in the mobile terminal so as to request access to the shared data in the server terminal 2. Since the shared data in the server terminal 2 is requested by the application 8 in the client terminal 1, the server terminal 2 transmits only data corresponding to the requested application data. In this case, when the shared data is restricted by copy right or the like by the shared-data management module 6, the server terminal 2 does not release the shared data. A sequence performed when the client terminal 1 accesses shared data in the server terminal 2 will be described with reference to Fig. 4.

Fig. 4 shows a sequence performed when the client terminal 1 accesses shared data in the server terminal 2.

First, the client terminal 1 detects radio data transmitted by the server terminal 2 and asks the shared-data connected-party management module 7 whether the detected shared-data connected-party information of the server terminal 2 is stored in the client terminal 1, so as to determine whether the client terminal 1 can be connected to the server terminal 2. When it is determined that the client terminal 1 can be connected to the server terminal 2, the client terminal 1 creates shared memory information request information in accordance with a request from the application 8 of the client terminal 1. The created information includes (1) requesting application information; (2) connected-party information; and (3) the number of pieces of shared data requested by the client terminal 1.
(1) requesting application information is used for determining which piece of shared data in the server terminal 2 is to be transmitted. For example, data related to a telephone directory application is transmitted when the requesting party is the telephone directory application, and data related to a Java application is transmitted when the requesting party is the Java application.
(2) connected-party information is held by the client terminal 1 and is used for authentication when the server terminal 2 releases shared data.
(3) the number of pieces of shared data which can be displayed on a display differs depending on the client terminal 1, and thus the number of pieces of data which can be dealt in the client terminal is described. The server terminal 2 transmits the described number of pieces of data. When the number of pieces of data stored in the server terminal 2 is larger than the number of pieces of requested data, prior/subsequent pieces to the pieces of data transmitted to the client terminal 1 can be obtained. A request for obtaining the data is transmitted from the application 8 of the client terminal 1 and is included in the data (3).

After the shared memory information request information including (1) to (3) has been created, the client terminal 1 requests shared data required by a specified application 8 in the client terminal 1 to the server terminal 2. The server terminal 2 verifies the connected-party information. When the server terminal 2 permits access to the shared data therein, it determines whether it has data corresponding to the specified application. When the server terminal 2 does not have the data, it transmits information indicating that fact to the client terminal 1. When the server terminal 2 has the data, it determines whether the shared data is not protected. When the server terminal 2 is a mobile terminal, the shared-data management module 6 determines whether the shared data is protected. When the shared data is protected in the server terminal 2, the server terminal 2 transmits information indicating "no data" to the client terminal 1. When the data is not protected, the server terminal 2 creates pieces of data requested by the client terminal 1 so as to transmit the data to the client terminal 1.

According to an embodiment, a client terminal (1), which is specifically a mobile terminal, receives shared data from a server terminal (2) and issues a request for receiving the data. The shared data in the server terminal can be obtained by the client terminal, and the shared data can be regarded as data virtually held in the client terminal. The server terminal releases shared data to the client terminal and functions as hardware of any type (including a mobile terminal) having a radio communication unit. In this way, by sharing data, a mobile terminal data memory sharing system, in which a data area in a mobile terminal can be effectively used, can be obtained.

## Claims

1. A mobile terminal data memory sharing system comprising: a server terminal (2) and a client terminal (1), **characterized in that**:
said server terminal (2) comprising a unit which obtains shared data from the client terminal, regards the shared data as data virtually held by the client terminal, and releases the shared data to the client terminal by radio communication, and
said client terminal (1) comprising a unit which transmits a request for receiving the shared data to the server terminal and a unit which receives the shared data from the server terminal.

2. A mobile terminal data memory sharing system according to Claim 1, **characterized in that** the client terminal (1) comprises a unit which stores connected-party information, which is transmitted by the server terminal (2) and which serves as authentication information used for sharing data, in the client terminal by automatically synchronizing to radio data.

3. A mobile terminal data memory sharing system according to Claim 2, **characterized in that** the connected-party information stored in the client terminal (1) comprise a plurality of pieces of the connected-party information, among which an optimal piece synchronized to received radio data is selected.

4. A mobile terminal data memory sharing system according to Claim 2 or 3, **characterized in that** the server terminal transmits a requested number of pieces of data by the client terminal.

5. A mobile terminal data memory sharing system according to Claim 4, **characterized in that**, when the number of pieces of data stored in the server terminal is larger than the number of pieces of data requested by the client terminal, all prior and subsequent pieces of the data can be referred to by a request from the client terminal.

6. A mobile terminal data memory sharing system according to one of Claims 1 to 5, **characterized in that** the server terminal can restrict the shared data.

7. A mobile terminal data memory sharing system according to one of Claims 1 to 6, **characterized in that** the client terminal can create request data corresponding to an application and the server terminal can transmit only data corresponding to the request data to the client terminal.

8. A mobile terminal data memory sharing system according to one of Claims 1 to 7, **characterized in that** the shared data provided by the server terminal is not registered with the client terminal but can be used only virtually, and the shared data can be shared in a limited space and can be distributed as a business advertising element for demonstration.

9. A program for allowing a server terminal (2) and a client terminal (1) to realize a mobile terminal data memory sharing function, the program being incorporated into the mobile terminal data memory sharing system according to Claim 1,
**characterized in that** the mobile terminal data memory sharing function comprises an OS function (3), a communication function (4), a mobile-terminal function (5), a shared-data management function (6), a shared-data connected-party management function (7), and an application function (8),
the OS function (3) serves as a platform environment in a mobile terminal,
the communication function is used for communication between the server terminal (2) and the client terminal (1) performed for obtaining data sharing information,
the mobile-terminal function has a software function specialized in a mobile terminal,
the shared-data management function (6) requests shared data to the server terminal through the communication function when operating as the client terminal, and transmits the shared data to the client terminal through the communication function when operating as the server terminal,
the shared-data connected-party management function (7) holds connected-party information used for connecting the client terminal to the server terminal, the connected-party information comprising a plurality of pieces, and selects a piece of the information compatible with the server terminal so as to access the shared data, and
the application function (8) is held in a mobile terminal, requests access to shared data, and obtains shared data specialized in an application in accordance with the request.
